# EUROPEAN PATENT APPLICATION

(11) **EP 4 092 058 A1**
(43) Date of publication of application: **23.11.2022**
(21) Application number: 21174232.5
(22) Date of filing: 18.05.2021
(51) Int. Cl.: C08F 220/14, C08F 220/18, C09J 133/06, C09J 151/00

(54) **AQUEOUS DISPERSION COMPRISING POLYMER PARTICLES USEFUL IN HEAT SEALING APPLICATIONS**

(71) Applicant: Evonik Operations GmbH, 45128 Essen (DE)
(72) Inventor: SCHARFENBERG, Markus, 55118 Mainz (DE); TRÖMER, Christine, 63546 Hammersbach (DE); STURM, Dominik, 64560 Riedstadt (DE); WALDHAUS, Michael, 64354 Reinheim (DE)
(74) Representative: Evonik Patent Association

(57) **Abstract**

The present invention is directed to an aqueous dispersion comprising particles comprising a first polymer phase and a second polymer phase, where the second polymer phase comprises from 2 to 10% by weight of units based on acids copolymerizable with methacrylates, based on the entirety of the two polymer phases, and wherein the particle have a particle size d₅₀, determined as given in the description, of from 100 to 150 nm, a process for preparing an aqueous dispersion comprising a first polymer phase and a second polymer phase, where the second polymer phase comprises of from 2 to 10% by weight of units based on acids copolymerizable with methacrylates, based on the entirety of the monomers used to prepare the two polymer phases, wherein the aqueous dispersion is produced by means of emulsion polymerization, where a first monomer mixture which leads to the first polymer phase is used as or charged together with an initial charge into a reactor and, after polymerization of the first monomer mixture, a second monomer mixture which leads to the second polymer phase is added to the reaction mixture and polymerized, characterized in that a chain-transfer agent is added to both monomer mixtures, and to the use of an aqueous dispersion according to the invention or obtained by a process according to the invention in a heat-sealing lacquer for the sealing of aluminum surfaces with respect to aluminum, polystyrene (PS), polylactide (PLA), or other polymer materials used in food packaging, and to a heat-sealing lacquer for the sealing of aluminum surfaces with respect to aluminum, polystyrene (PS), polylactide (PLA), or other polymer materials used in food packaging, comprising at least 50% by weight of the aqueous dispersion according to the invention or obtained by a process according to the invention.

## Description

### Field of the invention

The present invention is directed to an aqueous dispersion comprising particles comprising a first polymer phase and a second polymer phase, where the second polymer phase comprises from 2 to 10% by weight of units based on acids copolymerizable with methacrylates, based on the entirety of the two polymer phases, and wherein the particle have a particle size d₅₀, determined as given in the description, of from 100 to 150 nm, a process for preparing an aqueous dispersion comprising a first polymer phase and a second polymer phase, where the second polymer phase comprises of from 2 to 10% by weight of units based on acids copolymerizable with methacrylates, based on the entirety of the monomers used to prepare the two polymer phases, wherein the aqueous dispersion is produced by means of emulsion polymerization, where a first monomer mixture which leads to the first polymer phase is used as or charged together with an initial charge into a reactor and, after polymerization of the first monomer mixture, a second monomer mixture which leads to the second polymer phase is added to the reaction mixture and polymerized, characterized in that a chain-transfer agent is added to both monomer mixtures, and to the use of an aqueous dispersion according to the invention or obtained by a process according to the invention in a heat-sealing lacquer for the sealing of aluminum surfaces with respect to aluminum, polystyrene (PS), polylactide (PLA), or other polymer materials used in food packaging, and to a heat-sealing lacquer for the sealing of aluminum surfaces with respect to aluminum, polystyrene (PS), polylactide (PLA), or other polymer materials used in food packaging, comprising at least 50% by weight of the aqueous dispersion according to the invention or obtained by a process according to the invention.

### Prior art

US 6,194,514 explicitly describes aqueous two-layer systems composed of a primer on aluminum and of a second layer of an aqueous binder on the dried primer. An example of a primer described is an aqueous poly(meth)acrylate dispersion which is composed of two copolymers. One of the said copolymers here comprises from 2 to 10% by weight of glycidyl- or hydroxyl-functional monomers, and the other copolymer comprises from 2 to 10% by weight of acrylic or itaconic acid. EP 0 417 570 discloses an aqueous copolymer dispersion for the sealing of abovementioned materials. This copolymer is composed of at least 70% by weight of methacrylates with C1- to C4-alkyl esters, and of at least one functional monomer from the group of the acrylamides, methacrylamides, aminoalkyl acrylates or aminoalkyl methacrylates. Although these systems exhibit excellent heat-sealing strengths, they function exclusively as two-layer systems and need markedly longer stoving times for the lacquers than established solvent-based systems.

EP 0 574 803 describes aqueous dispersions for sealable coatings which comprise two copolymers with glass transition temperatures of from 50 to 150 °C and from -50 to 50 °C. One of the two copolymers has from 3 to 70% by weight content of acid-functional monomers. However, these systems do not have a good combination of blocking resistance and heat-seal-seam strength. The expression blocking resistance here means the undesired adhesion of the heat-sealing lacquer to a second aluminum foil or to a second lacquer-coated aluminum foil at temperatures below the sealing temperature. Blocking resistance is significant in particular in relation to the storage of coated aluminum foils.

WO 2011/017388 describes an aqueous dispersion for heat-sealable coatings, comprising a first copolymer with a glass transition temperature Tg of from -60 to 0 °C, and from 0.2 to 10% by weight of an ethylenically unsaturated acid or anhydride thereof. A second, hard copolymer with a glass transition temperature of from 50 to 120 °C is also present. Again, these systems do not have an adequate combination of blocking resistance and heat-seal-seam strength.

US 6,368,707 describes heat-sealable substrates composed of a copolymer dispersion in which a (meth)acrylate-based polymer with a glass transition temperature of at most-10 °C produced by means of emulsion polymerization is present with a copolymer with a glass transition temperature above 20 °C, which is a water-soluble or water-dispersible copolymer having carboxy groups neutralized by a base. There is no description of sealing capability in respect of aluminum.

WO 002014053282 A1 describes the use of an aqueous dispersion in a heat-sealing lacquer for the sealing of aluminum surfaces with respect to styrene, PET, PLA, or PVC, wherein prior to the sealing process, the heat-sealing lacquer is applied in a single layer to the aluminum surface, and wherein the heat-sealing lacquer is composed of at least 50% by weight of the aqueous dispersion, and wherein the aqueous dispersion comprises a first polymer phase with a glass transition temperature of from -20 to 30 °C and a second polymer phase with a glass transition temperature of from 20 to less than 50 °C, where the second polymer phase comprises from 2 to 10% by weight of acids copolymerizable with methacrylates, based on the entirety of the two polymer phases. The aqueous dispersion has been produced by means of emulsion polymerization, where a first monomer mixture which leads to a polymer with a glass transition temperature of from -20 to 30 °C is used as initial charge and, after polymerization of this monomer mixture, a second monomer mixture which leads to the polymer with a glass transition temperature of from 20 to less than 50 °C is added, and polymerized, and that the two polymer phases take the form of a core-shell particle.

None of the latter is dealing with corrosion protection. Therefore, there is still a strong demand for aqueous based heat-sealing lacquers which are free from polyvinylchloride (PVC) or PVC-copolymers and which can be used for the sealing of aluminum surfaces with respect to aluminum, polystyrene (PS), polylactide (PLA) and other polymer materials used in food packaging industry, resulting in peelable (easy-to-peel) sealings and which show better corrosion protection.

### Object

In the light of the prior art, it was an object of the present invention to develop a novel aqueous binder dispersion usable as heat-sealing lacquer for the sealing of aluminum foil with respect to aluminum, polystyrene (PS), polylactide (PLA), or other polymer materials used in food packaging industry, with improved corrosion protection. Preferably the aqueous binder dispersion should result in a binder with which heat-seal-seam strengths of at least 4 N/15 mm can be achieved after application without primer and exhibits good blocking resistance, preferably having a blocking temperature of 40 °C or above, preferably of from 40 to 60 °C.

Other objects not explicitly mentioned can be derived from the description and the examples, or directly from the prior art.

### Achievement of objects

Surprisingly the inventors found that the object can be achieved by an aqueous dispersion comprising particles having a particle size dso of from 100 to 150 nm, determined as given in the examples section.

Therefore the present invention is directed to an aqueous dispersion comprising particles comprising a first polymer phase and a second polymer phase, where the second polymer phase comprises from 2 to 10% by weight of units based on acids copolymerizable with methacrylates, based on the entirety of the two polymer phases, and wherein the particle have a particle size d₅₀, determined as given in the description, of from 100 to 150 nm, as claimed and further explained in more detail below.

The present invention is further directed to process for preparing an aqueous dispersion comprising a first polymer phase and a second polymer phase, where the second polymer phase comprises of from 2 to 10% by weight of units based on acids copolymerizable with methacrylates, based on the entirety of the monomers used to prepare the two polymer phases, wherein the aqueous dispersion is produced by means of emulsion polymerization, where a first monomer mixture which leads to the first polymer phase is used as or charged together with an initial charge into a reactor and, after polymerization of the first monomer mixture, a second monomer mixture which leads to the second polymer phase is added to the reaction mixture and polymerized, which is characterized in that a chain-transfer agent is added to both monomer mixtures, as claimed and further explained in more detail below.

The present invention is also directed to the use of an aqueous dispersion according to the invention or obtained by a process according to the invention in a heat-sealing lacquer for the sealing of aluminum surfaces with respect to aluminum, polystyrene (PS), polylactide (PLA), or other polymer materials used in food packaging, as claimed and further described in more detail below.

The present invention is even further directed to a heat-sealing lacquer for the sealing of aluminum surfaces with respect to aluminum, polystyrene (PS), polylactide (PLA), or other polymer materials used in food packaging comprising at least 50% by weight of the aqueous dispersion according to the invention or obtained by a process according to the invention as claimed and further described in more detail below.

The use of aqueous dispersions of the present invention has the advantage that aluminum foil in contact with the dispersion shows lesser tendency for corrosion.

Since the aqueous dispersion of the invention and the corresponding heat-sealing lacquer is water based, no potential problems with organic solvents or volatile organic compounds (VOC) can occur.

The aqueous dispersion of the invention and the corresponding heat-sealing lacquer is free of PVC or PVC-Copolymers and can be used to produce peelable (easy-to-peel) sealings, especially sealing aluminum foil against aluminum, PS, PLA and other polymer materials used in food packaging industry.

The heat-sealing lacquer based on the aqueous dispersion of the invention has the advantage, that it can be used without the need for addition of plasticizer.

Since the use PVC, PVC-Copolymers and/or plasticizer is/are not wanted in food packaging industry, the heat-sealing lacquer based on the aqueous dispersion of the invention is especially useful for sealings in food packaging industry.

The aqueous dispersion of the invention and the corresponding heat-sealing lacquer have the further advantage that they allow / show a low initial sealing temperature, preferably of about 70 °C.

The polymers, processes, and uses (methods to use) according to the invention are described by way of example hereinafter, without any intention that the invention be restricted to these illustrative embodiments. When ranges, general formulae or classes of compounds are specified below, these are intended to encompass not only the corresponding ranges or groups of compounds which are explicitly mentioned but also all subranges and subgroups of compounds which can be obtained by leaving out individual values (ranges) or compounds. Where documents are cited in the context of the present description, their content shall fully form part of the disclosure content of the present invention, particularly in respect of the matters referred to. Percentages specified hereinbelow are by weight unless otherwise stated. Where average values are reported hereinafter, these are the numerical average, unless stated otherwise. Where properties of a material are referred to hereinafter, for example viscosities or the like, these are the properties of the material at 25 °C, unless stated otherwise. Where chemical (empirical) formulae are used in the present invention, the specified indices may be not only absolute numbers but also average values.

The aqueous dispersion according to the invention comprising particles comprising a first polymer phase and a second polymer phase, where the second polymer phase comprises from 2 to 10% by weight of units based on acids copolymerizable with methacrylates, based on the entirety of the two polymer phases (4 to 20% by weight of units based on acids copolymerizable with methacrylates, based on the second polymer phase), is characterized in that the particle have a particle size dso, determined as given in the description below, of from 100 to 150 nm, preferably of from 100 to 120 nm.

The monomer composition of the polymers (polymer phases) can be determined by ¹H, ¹³C and 2D NMR spectroscopy using CDCl₃ as solvent on a Bruker 600 spectrometer.

The dispersion preferably comprises of from 15 to 64%, more preferably of from 35 to 55% by weight of particles based on the total weight of the dispersion. The particles preferably comprise from 25 to 78% by weight of units based on alkyl ester of methacrylic acid, from 4 to 40% by weight of units based on alkyl ester of acrylic acid, from 2 to 9% by weight of units based on acids copolymerizable with methacrylates and up to 20% by weight of units based on other monomers which are copolymerizable with (meth)acrylates, but which are not themselves (meth)acrylates and not acids copolymerizable with methacrylates, based on the total weight of the particles.

More preferably the particles comprise polymers comprising of from 49 to 65% by weight of units based on an alkyl ester of methacrylic acid, of from 25 to 40% by weight of units based on an alkyl ester of acrylic acid, of from 2 to 8% by weight of units based on (meth)acrylic acid and of from 5 to 15% by weight of units based on styrene, based on the total weight of the polymers. Most preferably the particles comprise polymers comprising of from 49 to 65 parts by weight of units based on an alkyl ester of methacrylic acid, of from 25 to 40 parts by weight of units based on an alkyl ester of acrylic acid, of from 2 to 8 parts by weight of units based on (meth)acrylic acid and of from 5 to 15 parts by weight of units based on styrene.

In this connection, the expression (meth)acrylic acid means methacrylic acid, acrylic acid or a mixture of these. Corresponding considerations apply to the expression (meth)acrylate, which comprises either methacrylates or acrylates or a mixture of these. In contrast, each of the expressions acrylate and methacrylate means precisely that.

Preferably the entirety of the polymers comprised in the particles comprises of from 49 to 65% by weight of units based on methyl methacrylate and/or butyl methacrylate, of from 22 to 33% by weight of units based on a C₁-C₄-alkyl ester of acrylic acid, of from 3 to 7% by weight of units based on a hydroxy-functional (meth)acrylate, of from 2 to 8% by weight of units based on (meth)acrylic acid, and of from 5 to 15% by weight of units based on styrene, more preferably the entirety of the polymers comprises of from 49 to 63% by weight of units based on methyl methacrylate and n-butyl methacrylate (preferably of from 24,5 to 31,5% by weight of methyl methacrylate and of from 24,5 to 31,5% by weight of n-butyl methacrylate), of from 22 to 33% by weight of units based on a n-butyl acrylate, of from 3 to 7% by weight of units based on hydroxy-ethyl acrylate, of from 2 to 8% by weight of units based on acrylic acid and of from 5 to 15% by weight of units based on styrene, based on the total weight of the polymers.

Even more preferably the entirety of the polymers comprised in the particles comprises of from 49 to 65 parts by weight of units based on methyl methacrylate and/or butyl methacrylate, of from 22 to 33 parts by weight of units based on a C₁-C₄-alkyl ester of acrylic acid, of from 3 to 7 parts by weight of units based on a hydroxy-functional (meth)acrylate, of from 2 to 8 parts by weight of units based on (meth)acrylic acid, and of from 5 to 15 parts by weight of units based on styrene, more preferably the entirety of the polymers comprises of from 49 to 63 parts by weight of units based on methyl methacrylate and n-butyl methacrylate (preferably of from 24,5 to 31,5 parts by weight of methyl methacrylate and of from 24,5 to 31,5 parts by weight of n-butyl methacrylate), of from 22 to 33 parts by weight of units based on a n-butyl acrylate, of from 3 to 7% parts weight of units based on hydroxy-ethyl acrylate, of from 2 to 8 parts by weight of units based on acrylic acid and of from 5 to 15 parts by weight of units based on styrene.

The first polymer phase preferably comprises units based on methyl methacrylate, hydroxy-functional (meth)acrylate, and C₁-C₄-alkyl ester of acrylic acid and the second polymer phase preferably comprises units based on butyl methacrylate, (meth)acrylic acid, and styrene.

In the aqueous dispersion according to the invention the particles preferably take the form of a core-shell particle with the first polymer phase building the core and with the second polymer phase located in the shell. Preferably the first polymer phase and the second polymer phase are based on the preferred monomers in the preferred amounts as given above.

The aqueous dispersion according to the invention is preferably free of PVC or PVC-Copolymers.

The aqueous dispersion according to the invention can be prepared by any known process, preferably emulsion polymerization process according to the invention for preparing an aqueous dispersion as described below.

The process according to the invention for preparing an aqueous dispersion comprising a first polymer phase and a second polymer phase, where the second polymer phase comprises of from 2 to 10% by weight of units based on acids copolymerizable with methacrylates, based on the entirety of the monomers used to prepare the two polymer phases (4 to 20% by weight of units based on acids copolymerizable with methacrylates, based on the entirety of the monomers used to prepare the second polymer phase), wherein the aqueous dispersion is produced by means of emulsion polymerization, where a first monomer mixture which leads to the first polymer phase is used as or charged together with an initial charge into a reactor and, after polymerization of the first monomer mixture, a second monomer mixture which leads to the second polymer phase is added to the reaction mixture and polymerized, characterized in that a chain-transfer agent is added to both monomer mixtures. Preferably the chain transfer agent is a thiol, more preferably dodecan-1-thiol (n-dodecyl mercaptan).

In particular, the emulsion polymerization is carried out in an aqueous phase in the presence of anionic, cationic or non-ionic emulsifiers known per se and of at least one free-radical-generating initiator in a two-stage reaction. The conduct of this type of emulsion polymerization can be found by way of example in H. Rauch-Puntigam, Th. Völker: Acryl- und Methacrylverbindungen [Acrylic and methacrylic compounds], Springer-Verlag 1967, pp. 217-230. The first polymerization stage is preferably carried out by means of a feed process where, once a certain temperature has been reached, the initiator, in particular inorganic peroxides such as potassium peroxodisulphate or ammonium peroxodisulphate (PPS, APS), preferably dissolved in water, is added to an initial charge made of deionized water and emulsifier in a suitable reaction vessel equipped with stirrer and heating system. The content of initiator in the initial charge is preferably in the range of from 0.01 mol% to 2 mol%, based on the monomers in the feed to the first stage.

The amounts of ionic emulsifiers used are preferably of from 0.01 to 2.0% by weight, based on the entire amount of monomer, and those that can be used are in particular anionic emulsifiers. Preferable ionic emulsifiers used are for example AEROSOL OT75(R) from Cyanamid BV, REWOPOL SB DO 75 from Evonik Operations GmbH or Dowfax 2A1 from Dow Europa SA. It is preferred to add an emulsifier, preferably a succinate, more preferably sodium succinate to each monomer mixture.

The first monomer mixture is preferably added over a certain period of time, more preferably within 0.5 to 3 hours, even more preferably within 2 to 3 hours. The feed to the first stage preferably comprises of from 20 to 60% by weight of the entire amount of water together with the monomers of the first stage. The first stage polymerization is preferably conducted at a temperature of from 70 to 100 °C, most preferably of from 75 to 85 °C

After first-stage polymerization, stirring is preferably continued for a period of time from 0.1 to 1 hour, preferably at elevated temperatures, more preferably at a temperature of from 70 to 100 °C, most preferably 75 to 85 °C. The reaction mixture might be cooled, preferably to a temperature of from 20 to 45 °C, before adding the second monomer mixture. Preferably the second monomer mixture is added directly at the end of the continued heating period without cooling.

The second monomer mixture, preferably containing the same initiator and emulsifier used for preparing the first monomer mixture, is preferably added within a period of from 10 to 150 minutes, preferably 80 to 120 minutes and heated to the second polymerization temperature of from 70 to 100 °C, most preferably 75 to 85 °C. Finally, stirring is preferably continued for 0.5 to 2 hours in order to complete the polymerization.

It can then be advantageous to allow the mixture to swell over a prolonged period, preferably of from 1 to 8 hours, before heating to the second polymerization temperature of from 70 to 100 °C, most preferably 75 to 85 °C. If the mixture is allowed to swell, it might be advantageous to cool the reaction mixture, preferably to a temperature of from 20 to 45 °C, before adding the second monomer mixture.

The aqueous dispersion used according to the invention preferably comprises a first polymer phase with a glass transition temperature of from -20 to 30 °C, preferably from -5 to 25 °C, particularly preferably of from 10 to 20 °C, and a second polymer phase with a glass transition temperature of from 20 to less than 55 °C, preferably of from 40 to 50°C.

Alternatively of from 0.01 to 5.0% by weight of non-ionic emulsifiers, e.g. ethoxylated alcohols or methacrylic esters of methoxy polyethylene glycols, for example Carbowax 550, or alkylphenols can be used instead of ionic emulsifiers. It is also possible to use a combination of ionic and non-ionic emulsifiers.

It might be advantageous to apply the obtained reaction mixture to a post-treatment. Preferably, the post-treatment includes the removal of coagulates. Removal can be done in a known manner, e. g. by filtration. As filters, sieves, frits, paper filters or the like can be used. Preferably the filters have a pore size of 125 microns.

It might be advantageous to add small amounts of ammonia to the aqueous dispersion in order to adjust pH before the sealing process. Improved colloidal stability and improved coating properties might be achieved by this measure.

Preferably the chain-transfer agent is added to each monomer mixture in an amount of from 0.1 to 2 % by weight, more preferably 0.15 to 0.75 by weight, based on the amount of monomers in the respective monomer mixture.

It is preferred, that each monomer mixtures comprise a chain transfer agent and an emulsifier and that the weight ratio of emulsifier to the chain-transfer agent in each monomer mixture is preferably of from 10 to 1 to 1 to 1, more preferably of from 5 to 1 to 1 to 1.

The first monomer mixture preferably comprises methyl methacrylate, hydroxy-ethyl acrylate, and n-butyl acrylate and the second monomer mixture preferably comprises n-butyl methacrylate, (meth)acrylic acid, preferably acrylic acid, and styrene. Preferably both monomer mixtures don't comprise any further compound comprising a vinyl radical (vinyl residue).

The entirety of monomers used is preferably composed of from 49 to 63% by weight of methyl methacrylate and n-butyl methacrylate, of from 20 to 30% by weight of n-butyl acrylate, of from 3 to 7% by weight of hydroxy-ethyl acrylate, of from 2 to 8% by weight of acrylic acid, and of from 5 to 15% by weight of units based on styrene, based on the total amount of monomers present in both monomer mixtures.

More preferably the entirety of the monomers used comprises of from 24,5 to 31,5% by weight of methyl methacrylate, of from 24,5 to 31,5% by weight of n-butyl methacrylate, of from 22 to 33% by weight of n-butyl acrylate, of from 3 to 7% by weight of hydroxy-ethyl acrylate, of from 2 to 8% by weight of acrylic acid, and of from 5 to 15% by weight of styrene, based on the total weight of monomers.

Even more preferably the entirety of the monomers used comprises of from 24,5 to 31,5 parts by weight of methyl methacrylate, of from 24,5 to 31,5 parts by weight of n-butyl methacrylate, of from 22 to 33 parts by weight of n-butyl acrylate, of from 3 to 7% parts weight of hydroxy-ethyl acrylate, of from 2 to 8 parts by weight acrylic acid and of from 5 to 15 parts by weight of styrene.

The aqueous dispersion according to the invention or obtained by a process according to the invention can be used as or in a heat-sealing lacquer for the sealing of aluminum surfaces with respect to aluminum, polystyrene (PS), polylactid (PLA), or other polymer materials used in food packaging. Preferably the heat-sealing lacquer is composed of at least 50% by weight, preferably of from 70 to 100% by weight, most preferably 90 to 100% by weight of the aqueous dispersion according to the invention. The aqueous dispersion can generally be used directly in a heat-sealing process. It might be advantageous in particular instances to add limited amounts of thickeners, antiblocking agents or film-formation aids.

The Heat-sealing lacquer according to the invention for the sealing of aluminum surfaces with respect to aluminum, polystyrene (PS), polylactide (PLA), or other polymer materials used in food packaging, is therefore characterized in that it comprises at least 50% by weight, preferably of from 70 to 100% by weight, most preferably 90 to 100% by weight. of the aqueous dispersion according to the invention or obtained by a process according to the invention. The heat-sealing lacquer according to the invention is preferably free of PVC or PVC-Copolymers. The heat-sealing lacquer according to the invention preferably comprises of from 15 to 64% by weight, more preferably of from 35 to 55% by weight of polymer particles, preferably core-shell polymer particles, preferably composed as described above in detail, based on the total weight of the heat-sealing lacquer. It is preferable that the heat-sealing lacquer according to the present invention is applied in a single layer to the aluminum surface before the sealing process. The heat-sealing lacquer according to the present invention can be applied by spraying, spreading, casting, dip-coating, doctoring or rolling. The heat-sealing lacquer is preferably applied to the aluminum foil in thickness that after drying a layer of from 2 to 10 µm is obtained.

The drying of the coated aluminum foil is preferably undertaken in a drying oven or in a continuous drying tunnel, optionally at reduced pressure and preferably at temperatures of from 100 to 240 °C. The required drying time generally becomes shorter as the drying temperature increases and is preferably of from 5 sec to 5 min. Multiple application is optionally also possible. The heat-sealing lacquer according to the present invention might also be suitable for application to non-porous, coherent substrate surfaces, for example those of plastics foils or other metal foils.

Heat-sealing generally requires that the glass transition temperature of the polymer (poly(meth)acrylate) is exceeded in the coating process. The shorter the contact time and the poorer the heat transfer through the substrate layer, the greater the extent to which the temperature of the heat-sealing process has to be above the required sealing temperature. Thin metal foils exhibit very good heat transfer and allow the temperature of the heat-sealing jaws to be only slightly above the melting point / glass transition temperature of the polymer (poly(meth)acrylate), although in practice markedly higher heat-sealing temperatures are mostly selected, e.g. from 100 to 240°C, in order to maximize sealing rate. The glass transition temperature of a plastics substrate (PLA, PS etc.) can restrict the heat-sealing temperature. In order to achieve high-strength sealing, pressure of at least 0.1 MPa, preferably of from 0.1 to 0.5 MPa, should be applied during the heat-sealing process.

The subject-matter of the present invention is elucidated in detail in the examples which follow, without any intention that the subject-matter of the present invention be restricted to these.

### Examples

### Raw Material used

**Table 1: Raw materials used, trade names and producer**

| Chemical name | Abbreviation | Tradename | Producer |
|---|---|---|---|
| Sodium diisooctylsulfosuccinate in ethanol | | REWOPOL^{®} SB DO 75 | Evonik Operations GmbH |
| Dodecan-1-thiol | n-DDM | Dodecylmercaptan | Aldrich |
| Ammonium persulfate | APS | Ammoniumperoxodisulfat | Roth |
| Methyl methacrylate | MMA | MERACRYL MMA | Röhm |
| n-butyl acrylate | n-BA | Butylmethacrylat | Sigma Aldrich |
| Hydroxy-ethyl acrylate | HEA | 2-Hydroxyethylacrylat | Aldrich |
| | | | ACROS |
| Acrylic acid | AA | Acrylic Acid/ Acrylsäure | Aldrich |
| | | | ACROS |
| Styrene | | Styrene / Styrol | Aldrich |
| | | | ACROS |
| n-butyl methacrylate | BMA | MERACRYL n-BMA | Röhm |
| Aluminum foil 38 µm | Al foil | Alu 38µm, weich, CT | Constantia-TEICH |
| Polystyrene foil 500 µm | PS foil | | Fernholz Verpackungen |

Inventive Example 1 provides a detailed description of the synthesis method and of the nature of the starting materials used.

All examples (polymerization reaction processes) were conducted in two stages, in each case distributing 518 g of monomer over the two stages. The emulsifier content was 0.7 weight-%, based on the monomers used, of which 52.5% were used in the initial charge plus first stage and 47.5% in the second stage.

The ratio of the emulsifier used in the initial charge in the reactor and in the first stage respectively were varied. The percentage ratio based on the total amount of emulsifier used in initial charge and first stage is given for each example in table 2. The initial charge and the emulsions were in each example prepared in a way to result in a total water content of the resulting dispersion of about 48% by weight. The amount of initiator used is 0.0957 mol% of ammonium persulfate (APS), based on the monomers of the first stage. A further amount of 0.1077 mol% of initiator, based on the monomers of the second stage, is added to the second-stage emulsion. The variable amount of (polymerization) regulator was compensated by the amount of monomer.

### Example 1

Initial charge: 216 g of deionized water and 0.48 g of Rewopol SBDO 75 emulsifier were weighed into a 2-litre flat flange beaker with lid, thermometer, and stirrer, and were heated to an internal temperature of about 80 °C in a water bath, while stirring (150 rpm).

A first-stage emulsion E1 was produced by weighing 1.42 g of Rewopol SBDO 75, 31.20 g of hydroxyethyl acrylate, 137.3 g of MMA, 142.4 g of n-butyl acrylate, 1.09 g dodecan-1-thiol, and 160.9 g of deionized water into a Woulff bottle and stirring this mixture for 5 min, leaving it to stand for 1 min and then stirring for a further 15 min.

6.0 mL of APS aqueous solution (10% by weight of APS) were added to the initial charge in the flat flange beaker that was heated to an internal temperature of 80 °C and incorporated by stirring for 5 min. The emulsion E1 was metered into the flat flange beaker at a metering rate of 3.3 g/min for three minutes. When a slight temperature rise is observed, the metering is interrupted for 4 min. Afterwards the rest of the emulsion was metered at a metering rate of 3.3 g/min, and on completion stirring was continued for 20 min.

The second-stage emulsion E2 was produced by weighting 1.72 g of REWOPOL^{®} SB DO 75 emulsifier, 20.8 g of acrylic acid, 41.6 g of styrene, 145.2 g of n-butyl methacrylate, 0.42 g dodecan-1-thiol, and 107.4 g of deionized water into a Woulff bottle, stirring the mixture for 5 min, leaving it to stand for 1 min and then again stirring for 15 min. 4.2 ml of an aqueous ammonium persulfate solution (10% by weight of ammonium persulfate) were added to this mixture and incorporated by vigorous stirring.

Once the reaction time for the first stage had expired, the second stage emulsion E2 was metered into the mixture (into the flat flange beaker) at a metering rate of 3.3 g/min. This was followed by 60 minutes of continued-reaction time. The dispersion obtained was cooled and then filtered through a 125 µm sieve. The filter cake obtained was dried in a compartment dryer at 80 °C and reduced pressure (membrane pump vacuum) over night and balanced to determine the coagulate content. The dispersion obtained as filtrate was used for the heat sealing experiments below.

### Examples 2 to 6

Examples 2 to 6 (examples 3 to 6 being comparative examples) differ from Example 1 in the ratio of emulsifier (Rewopol^{®} SBDO 75) used in the initial charge (in the flat flange beaker) and the first stage emulsion, and in the amount of (polymerization) regulators (dodecan-1-thiol) used to produce the first stage emulsion E1. Values for both parameters are given in table 2.

### Example 7 (comparative example):

The ratio of monomers was changed in the first stage emulsion E1 and the second stage emulsion E2. In the first stage n-butyl acrylate was used in an amount of 170.8 g and MMA was used in an amount of 108.6 g. In the second stage 145.2 g of BMA and 145.2 g by weight of MMA were used. The other monomers were used in the amount as given in example 1.

### Example 8 (comparative example):

The monomer ratio between the first stage emulsion E1 and the second stage emulsion E2 was changed. In the first stage n-butyl acrylate was used in an amount of 118.3 g, MMA was used in an amount of 115.7 g and hydroxyethyl acrylate was used in an amount of 26.0 g. In the second stage 181.5 g of BMA, 52.0 g of styrene and 26.0 g acrylic acid were used. The other materials were used in the amount as given in example 1.

### Example 9: Heat sealing and determination of heat sealing properties

### Foil material used

High-flexibility aluminum foils of thickness 38 µm and PS foils of thickness 500 µm were used.

### Laboratory application of heat-sealing dispersion

A hand coater (Profilrakel-Set HR01, mtv messtechnik oHG, Köln) with bar no. 3 was used to apply the aqueous binder.

### Laboratory drying of coated foils

Directly after application of the aqueous binder, the foils were dried at 180 °C in a convection oven for 15 seconds.

### Heat-sealing and determination of seal seam strength

Heat sealing equipment HSG-C from Brugger Feinmechanik GmbH was used to produce the seals. Seal seam strength of the heat-sealing specimens was tested based on DIN 51 221.

Seal seam strength was determined by cutting sealed specimens into strips of width 15 mm. The specimens were obtained using different sealing conditions:
Sealed specimen A): aluminum-coating vs. coating-aluminum for 30 seconds using a pressure of 0.1 MPa and a temperature of 70 °C using two heated jaws.
Sealed specimen B): aluminum-coating vs. PS for 1 second using a pressure of 0.3 MPa and a temperature of 180 °C using only one heated jaw.

The specimens were tested in a tensile tester Zwick ProLine with a Zwick DO-FB 0,5TH load cell using a pull velocity of 100 mm/min. During tensile testing, care was taken to ensure that the angle between the separated parts of the foils and the remainder not yet subjected to stress was 180° for specimen A) and 90° for specimen B).

### Determination of blocking temperature

Blocking temperature was determined by using the heat-sealing equipment described above, but after replacement of one of the heated jaws by an unheated rubber jaw. The lacquered sides of two lacquered aluminum strips (prepared as described above) were pressed against one another at a defined temperature under a pressure of 1 bar (0,1 MPa) for 30 seconds in the equipment. The blocking temperature is the temperature at which the aluminum strips remain adhering to one another when only one of the strips is held. At lower temperatures, the weight of the aluminum strips is sufficient to separate these from one another. Measurements were made at intervals of 5 °C.

### Determination of corrosion protection

The efficiency of the corrosion protection was determined using a coated aluminum foil of size 200 x 100 mm. The sides were folded to obtain a tub with a base area of 140 x 80 mm. The tub was filled 5 mm with a test solution consisting of 50 mL concentrated hydrochloric acid and 10 g of copper sulfate in 950 mL purified water. The test solution was removed after 30 min. The efficiency of the corrosion protection was determined by counting the dots of copper deposits visible by eye.

### Determination of particle size

Particle size was determined by laser diffraction using a Beckman Coulter LS 13320 Laser Diffraction Particle Size Analyzer and the PIDS-Technology. The particle size values given in table 2 being the dso from the numerical distribution.

**Table 2: Composition and parameters of the product obtained**

| Example | Emulsifier¹ | Regulator in 1^{st} stage (%)² | Coagulate (%) | Particle size dso (nm) | Blocking temp. (°C) | HSF (N/15mm) | | No. of dots observed |
|---|---|---|---|---|---|---|---|---|
| | | | | | | 70 °C | 180 °C | |
| 1 | 25:75 | 0.35 | 0.50 | 114 | 45 | 0.8 | 5.2 | 1 |
| 2 | 25:75 | 0.5 | 0.14 | 116 | 45 | 1.2 | 4.0 | 0 |
| 3 | 10:90 | - | 0.12 | 170 | 50 | 1.1 | 6.5 | >5 |
| 4 | 2.5:97.5 | 0.5 | 0.86 | 385 | 45 | 1.2 | 4.7 | >5 |
| 5 | 25:75 | - | 0.46 | 124 | 45 | 0.5 | 4.5 | 5 |
| 6 | 3.5:96.5 | 0.5 | 0.82 | 284 | 45 | 1.0 | 5.0 | >20 |
| 7 | 10:90 | 0.5 | 0.70 | 224 | < 35 | 3.0 | 5.0 | > 20 |
| 8 | 10:90 | - | 0.65 | 183 | 50 | 0.7 | 3.9 | >10 |

| | | | | | | | | |
|---|---|---|---|---|---|---|---|---|
| ¹ weight ratio of emulsifier in initial charge to E1 ² weight % based on the monomer content | | | | | | | | |

It can be seen from table 2 that the lowest number of dots - corresponding to the best corrosion protection - was obtained by using a dispersion according to inventive examples 1 or 2. The best results were obtained with the dispersion according to example 2: no dots were observed and the amount of coagulate (non-usable product) is low. Using a dispersion as disclosed in Example 2 of WO2014/053282 A1 where the emulsifier allocation is 10:90, no or only a bad corrosions protection can be observed (see example 3 of the present application). If the particles in the dispersion become too large, e.g. by reducing the amount of emulsifier used in the initial charge, the corrosion protection abilities further decrease (example 4 and 6 of the present invention). Smaller particles increased the amount of coagulate (compare example 3 and 5), which could be reduced by regulator (chain transfer agent) in stage 1 emulsion E1 (compare example 5 and 1). By changing the monomer allocation ratio of the first stage and second stage from 60:40 to 50:50 (compare example 3 and 8) the corrosion protection became even worse. The decrease of the blocking temperature also decreases the corrosion protection (compare example 3 and 7) and increases the initial sealing temperature, which was checked at 70 °C sealing temperature. All samples have a satisfactory initial sealing temperature and a good sealing behavior at 180 °C. Despite the changes in example 1 to 6 and 8, the blocking temperature was 45 °C or higher.

## Claims

1. Aqueous dispersion comprising particles comprising a first polymer phase and a second polymer phase, where the second polymer phase comprises from 2 to 10% by weight of units based on acids copolymerizable with methacrylates, based on the entirety of the two polymer phases, **characterized in that** the particle have a particle size d₅₀, determined as given in the description, of from 100 to 150 nm, preferably of from 100 to 120 nm.

2. Aqueous dispersion according to Claim 1, **characterized in that** the dispersion comprises of from 15 to 64% by weight of particles which comprise from 25 to 78% by weight of units based on alkyl ester of methacrylic acid, from 4 to 40% by weight of units based on alkyl ester of acrylic acid, from 2 to 9% by weight of units based on acids copolymerizable with methacrylates and up to 20% by weight of units based on other monomers which are copolymerizable with (meth)acrylates, but which are not themselves (meth)acrylates and not acids copolymerizable with methacrylates, based on the total weight of the particles.

3. Aqueous dispersion according to claim 1 or 2, **characterized in that** the particles comprise polymers comprising of from 49 to 65% by weight of units based on an alkyl ester of methacrylic acid, of from 25 to 40% by weight of units based on an alkyl ester of acrylic acid, of from 2 to 8% by weight of units based on (meth)acrylic acid and of from 5 to 15% by weight of units based on styrene, based on the total weight of the polymers.

4. Aqueous dispersion according to any one of claims 1 to 3, **characterized in that** entirety of the polymers comprised in the particles comprise of from 49 to 65% by weight of units based on methyl methacrylate and/or butyl methacrylate, of from 22 to 33% by weight of units based on a C₁-C₄-alkyl ester of acrylic acid, of from 3 to 7% by weight of units based on a hydroxy-functional (meth)acrylate, of from 2 to 8% by weight of units based on (meth)acrylic acid, and of from 5 to 15% by weight of units based on styrene.

5. Aqueous dispersion according to Claim 4, **characterized in that** the entirety of the polymers is composed of from 49 to 63% by weight of units based on methyl methacrylate and n-butyl methacrylate, of from 22 to 33% by weight of units based on a n-butyl acrylate, of from 3 to 7% by weight of units based on hydroxy-ethyl acrylate, of from 2 to 8% by weight of units based on acrylic acid and of from 5 to 15% by weight of units based on styrene, based on the total weight of the polymers.

6. Aqueous dispersion according to any one of claims 1 to 5, **characterized in that** the first polymer phase comprises units based on methyl methacrylate, hydroxy-functional (meth)acrylate, and C₁-C₄-alkyl ester of acrylic acid and that the second polymer phase comprises units based on butyl methacrylate, (meth)acrylic acid, and styrene.

7. Aqueous dispersion according to any one of claims 1 to 6, **characterized in that** the particles take the form of a core-shell particle with the first polymer phase building the core and with the second polymer phase located in the shell.

8. Process for preparing an aqueous dispersion comprising a first polymer phase and a second polymer phase, where the second polymer phase comprises of from 2 to 10 % by weight of units based on acids copolymerizable with methacrylates, based on the entirety of the monomers used to prepare the two polymer phases, wherein the aqueous dispersion is produced by means of emulsion polymerization, where a first monomer mixture which leads to the first polymer phase is used as or charged together with an initial charge into a reactor and, after polymerization of the first monomer mixture, a second monomer mixture which leads to the second polymer phase is added to the reaction mixture and polymerized, **characterized in that** a chain-transfer agent is added to both monomer mixtures.

9. Process according to claim 8, **characterized in that** an aqueous dispersion as claimed in any one of claims 1 to 7 is prepared.

10. Process according to claim 8 or 9, **characterized in that** the amount of chain-transfer agent is added to each monomer mixture in an amount of from 0.1 to 2% by weight, preferably 0.15 to 0.75% by weight, based on the amount of monomers in the respective monomer mixture.

11. Process according to any one of claims 8 to 10, **characterized in that** an emulsifier, more preferably a succinate is added to each monomer mixture and that the weight ratio of emulsifier to the chain-transfer agent in each monomer mixture is of from 10 to 1 to 1 to 1, more preferably of from 5 to 1 to 1 to 1.

12. Process according to any one of claims 8 to 11, **characterized in that** the first monomer mixture comprises methyl methacrylate, hydroxy-ethyl acrylate, and n-butyl acrylate and that the second monomer mixture comprises n-butyl methacrylate, (meth)acrylic acid, and styrene.

13. Process according to Claim 12, **characterized in that** the entirety of monomers used is composed of from 49 to 65% by weight of methyl methacrylate and n-butyl methacrylate, of from 22 to 33% by weight of n-butyl acrylate, of from 3 to 7% by weight of hydroxy-ethyl acrylate, of from 2 to 8% by weight of acrylic acid, and of from 5 to 15% by weight of units based on styrene, based on the total amount of monomers present in both monomer mixtures.

14. Use of an aqueous dispersion as claimed in any one of claims 1 to 7 or obtained by a process as claimed in any one of claims 8 to 13 as or in a heat-sealing lacquer for the sealing of aluminum surfaces with respect to aluminum, polystyrene (PS), polylactide (PLA), or other polymer materials used in food packaging.

15. Use according to claim 14, **characterized in that** the heat-sealing lacquer is composed of at least 50% by weight of the aqueous dispersion

16. Heat-sealing lacquer for the sealing of aluminum surfaces with respect to aluminum, polystyrene (PS), polylactide (PLA), or other polymer materials used in food packaging, **characterized in that** it comprises at least 50% by weight of the aqueous dispersion as claimed in any one of claims 1 to 7 or obtained in a process as claimed in any one of claims 8 to 13.
